# EUROPEAN PATENT APPLICATION

(11) **EP 2 589 826 A2**
(43) Date of publication of application: **08.05.2013**
(21) Application number: 12191008.7
(22) Date of filing: 02.11.2012
(51) Int. Cl.: F16C 11/06, B60G 7/00, B60G 9/02

(54) **V stay bar joints and ball joint interior structure**

(30) Priority: 03.11.2011 TR 201111004
(71) Applicant: Ran Oto Yedek Parca Kalipcilik Makina Elektronik Otomotiv Sanayi Ve Ticaret Limited Sirketi, Bursa (TR)
(72) Inventor: Erdem, Adem, 16700 BURSA (TR)
(74) Representative: Iskender, Ibrahim

(57) **Abstract**

The invention relates to V stay bars (2) and ball joints (1) used on vehicles working under heavy load such as lorries, SEMI-TRAILER trucks, buses, providing connection of V stay bar (2) to ball joint body (10), wherein interior surface (11) of said body (10) comprising spherical surface (11.1) formed on the zone where sphere bearing (20) contacts, exterior surface (22.1) of lower zone (22) of said sphere bearing (20) having spherical form, bearing material (23) manufactured from CSB22 type of polyethylene material with high abrasion resistance and tab (12) that prevents sagging and leakage of sphere bearing (20).

## Description

### The Related Art

The invention relates to central repair kit and V rod body interior embodiment, used on vehicles working under heavy load such as lorries, semi-trailer truck, buses, for use in centre head of V stay bars with plastic bearings, having a new bearing system, giving table and body the capability of making an angle of at least 50°swing (moving) angle according to one another.

### The Prior Art

Flat stay bar and V stay bar are connection pieces used on heavy commercial vehicles. With the property of providing suspension and differential safety in frame movements in heavy loads, they are an essential position on brand new vehicles. They are effectively used for creating independent suspension at front wheels in buses. In addition, when used as a connection piece between the chassis and the differential, they ensure connection of differential to chassis in a strong way and prevent the shock arising from road conditions felt by driver and passengers. While stay bars which are the connection pieces between chassis and axle provide restriction of lateral movements, they provide safe travel by absorbing the negative impact (acceleration) which traction force causes at the wheels, the power occurring during braking, the uncontrolled movements occurring at the wheels due to the road.

Among existing systems, swing angle of the table and the body according to one another occurs as maximum 44° in the systems with plastic bearing that are used in the centre repair kit. Excessive load that can be applied in mounting of plastic bearing can lead to the angle's remaining even at lower levels (approximately 38°), by leakage of the lower skirt section of the plastic bearing. In this system cited, plastic body exit diameter and lower centre of the bearing prevent system from moving above swing angle of 44°.

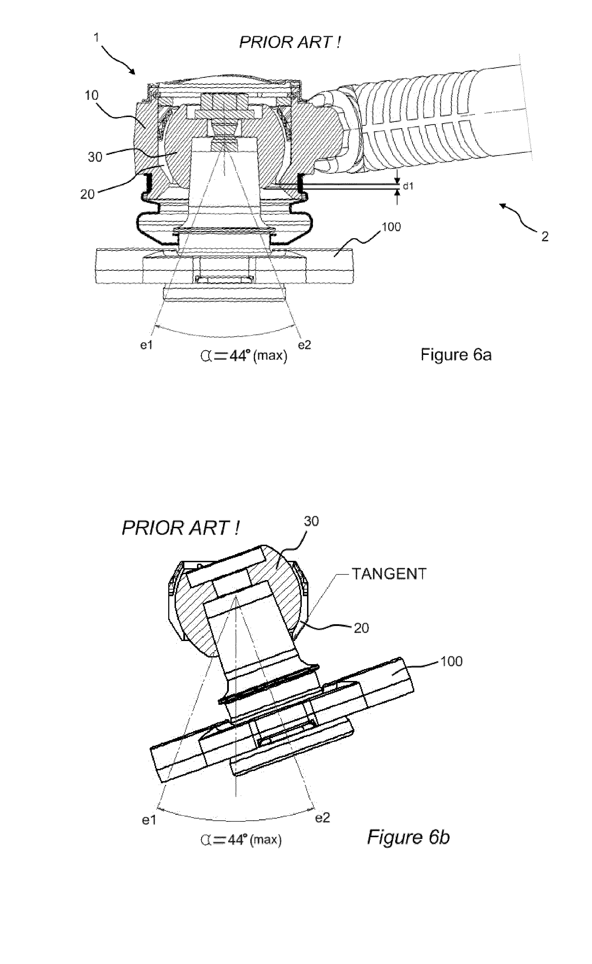

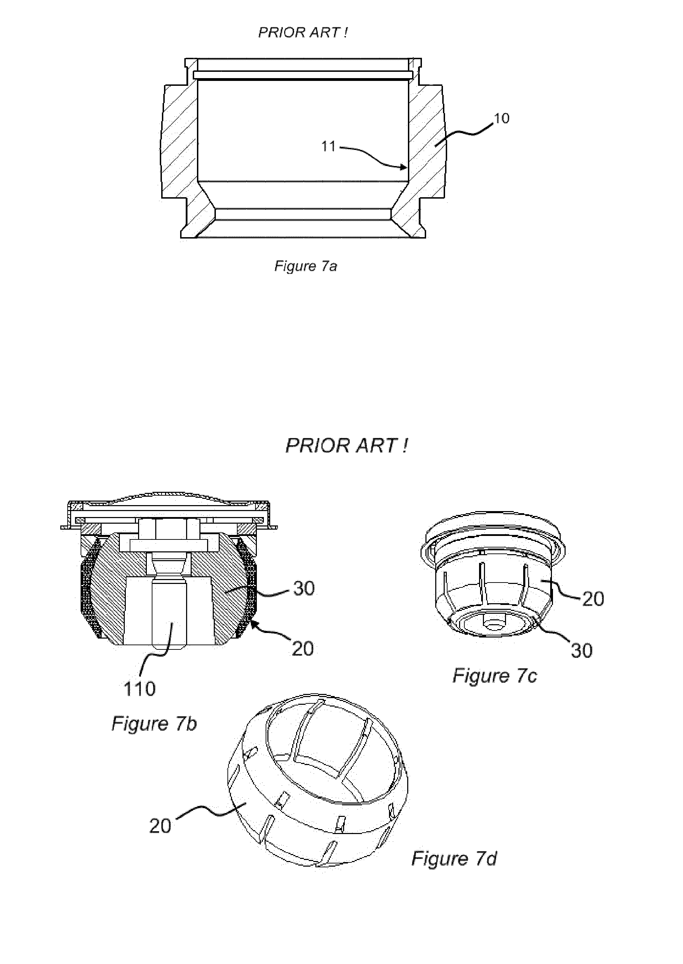

In the prior art, after utilisation of a new V rod, a replacement process can be performed on V stay bar by replacement of centre repair kit in the service. However, this angle can drop below 44° in the V stay bar whose centre repair kit is replaced. In Figure 6a, Figure 6b and Figure 7a, Figure 7b, Figure 7c and Figure 7d, drawings belonging to the prior art are contained.

As will be seen from Figure 6a and Figure 6b, in case the table performs an swing, conical zone of the table leans against the lower edge of the plastic bearing, and to the metallic part of V rod component as a result of smash of plastic. As a result of this leaning, on the other hand, it restricts the swing (moving) angle to 44°.

V stay bar won't reduce the swing made by vehicle. Swing occurs as a result of working conditions of a vehicle. Since the vehicles on which V stay bar is used are off-road vehicles, in case in an angle of 50° that can occur, the V rod fails to respond this angle formed as such, it leads to disintegration of V rod, breaking up of differential - chassis connection, and as a result of this, on the other hand, damaging of the suspension components such as boots, rubber suspension members and so on.

In conclusion, making a development in respective related art has become necessary due to drawbacks disclosed above and the inadequacy of existing solutions about the issue.

### Purpose of the Invention

The invention aims to eliminate above cited drawbacks, upon its creation, inspired by existing situations.

Purpose of the invention is that moving angle between table and body is minimum 50°, by means of forming exterior surface of sphere bearing and interior surface of body in spherical form. Thus, the sphere inside bearing can comfortably make an swing above 50°.

Another purpose of the invention is, by means of moving angle between table and body being minimum 50°, prevention of drawbacks such as disintegration of V rod, breaking up of differential - chassis connection as a result of failure to respond of V rod to moving angles below 50°, and resultantly damaging of other suspension components.

Another purpose of the invention is, by means of the fact that on repair kit, vertical distance (d2) between bearing and sphere lower surface is greater than vertical distance (d1) between bearing and sphere lower surface in the prior art, moving angle is increased without reducing the resistance.

Another purpose of the invention is to increase moving angle by means of that fact that the surface of body contacting sphere bearing has the same radius as the surface where sphere bearing contacts the body.

Another purpose of the invention is to keep the value of moving angle as it is during the process of assembly of the repair kit and during its operation after assembly of V rod, by means of the tab formed at lower end of surface where body contacts sphere bearing.

Another purpose of the invention is shaping up of sphere bearing by means of the fact that interior surface of sphere bearing used in repair kit is covered with CSB22 type of bearing material having the capability of being shaped up.

Another purpose of the invention is provision of lube containment property to bearing material and provision of high lubrication capability to repair kit, by means of the lubricating cavities formed on said CSB22 type of bearing material.

Another purpose of the invention is to increase strength of repair kit embodiment by means of said CSB22 type of bearing material, thus increasing service life.

Another purpose of the invention is, by means of the fact that abrasion strength of said CSB22 type of bearing material is high thanks to abrasion resistance of bearing material, abrasion time of repair kit gets elongated, and thus its service life under high loads and movements is increased.

Another purpose of the invention is to prevent formation of reduction in moving angle due to reasons such as leakage of bed, table's striking the bearing and deformation of bearing. The tab is one of the most important factors in preventing occurrence of said reduction.

To fulfil the objectives described above, the invention relates to repair central kit of V stay bars and the associated body interior embodiments, used on vehicles working under heavy load such as lorries, semi-trailer trucks, buses, wherein comprising body that provides connection of V stay bar to central repair kit embodiment, sphere that is positioned inside said body, spherical surface that comprises sphere bearing performing a bearing function between interior surface of said body, formed on the zone where interior surface of said body contacts sphere bearing, lower zone of said sphere bearing comprises outer surface having spherical form.

The structural and characteristic properties and all of its advantages of the invention will be understood more clearly from the drawings provided below and from the detailed description written by making references to these drawings and therefore the assessment should be made by taking these drawings and the detailed description into account.

### Figures that will help to understand the Invention

Figure 1a is a side, two dimensional view illustrating minimum moving angle (50°) of preferred embodiment of central repair kit of V stay bars which is the subject of the invention.
Figure 1b is a side, cross-sectional view illustrating preferred embodiment of all the members of minimum moving angle (50°) of central repair kit of V stay bars, which is the subject of the invention, in assembled form.
Figure 1c is a top, perspective view preferred embodiment of illustrating preferred embodiment of all the members central repair kit of V stay bars, which is the subject of the invention, in assembled form.
Figure 1d is a top, perspective view illustrating preferred embodiment of all the members central repair kit of V stay bars, which is the subject of the invention, in disassembled form.

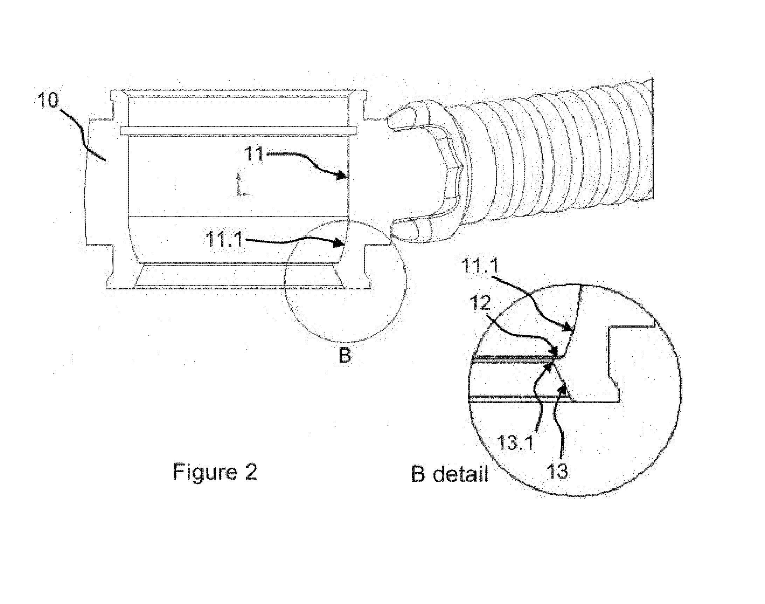

Figure 2 is a side, cross-sectional view of preferred embodiment of body interior structure which is the subject of the invention.
Figure 3a is a top, perspective view of preferred embodiment of sphere bearing which is the subject of the invention.
Figure 3b is a side, cross-sectional view of preferred embodiment of sphere bearing which is the subject of the invention.
Figure 3c is a lower, two dimensional view of preferred embodiment of sphere bearing which is the subject of the invention.
Figure 3d is a two dimensional view of preferred embodiment of sphere bearing which is the subject of the invention in blasted view.

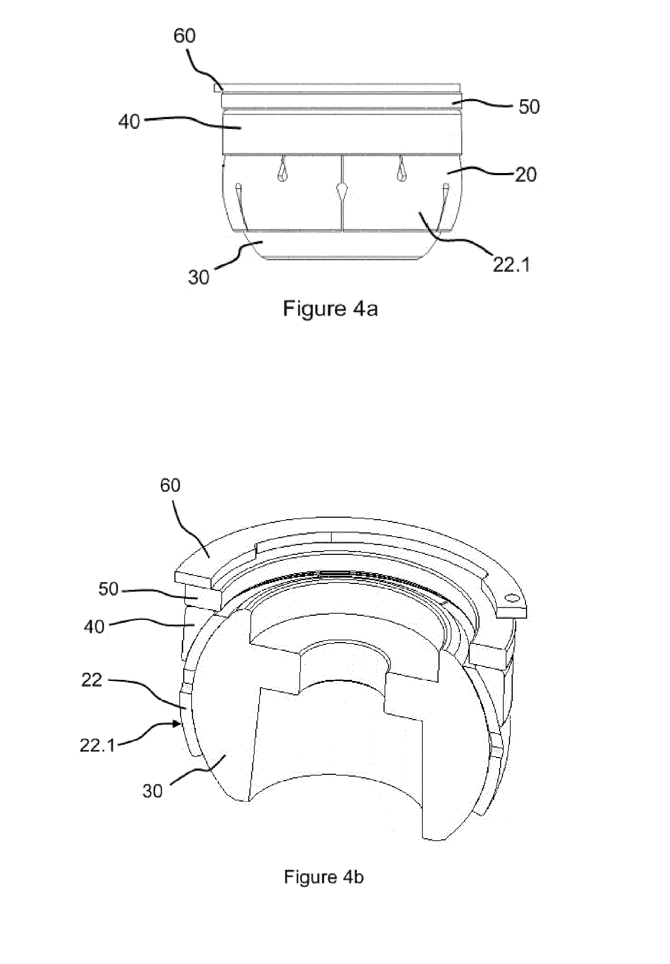

Figure 4a is a side, two dimensional view, in preferred embodiment of central repair kit of V stay bars which is the subject of the invention, illustrating compression ring, compression member, compression bearing, sphere bearing and sphere in a state wherein they are positioned one over another.
Figure 4b is a top, perspective view, in preferred embodiment of central repair kit of V stay bars which is the subject of the invention, illustrating compression ring, compression member, compression bearing, sphere bearing and sphere in a state wherein they are positioned one over another.

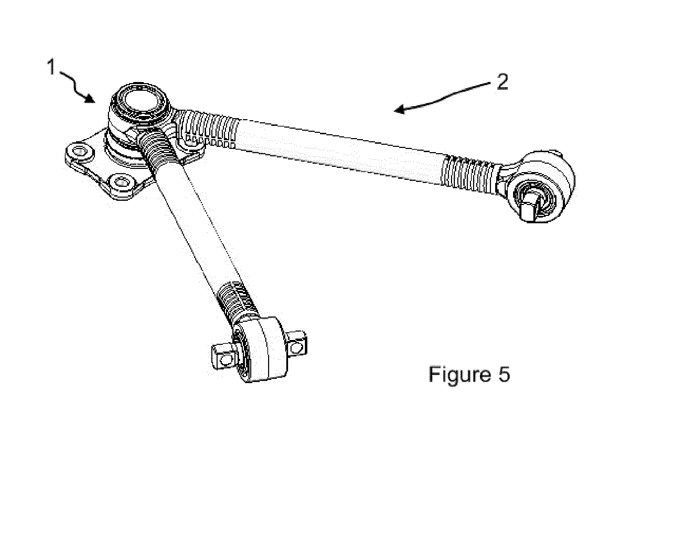

Figure 5 is a top, perspective view, in preferred embodiment of central repair kit of V stay bars which is the subject of the invention, illustrating V stay bars as well.
Figure 6a are side, two dimensional, cross-sectional views belonging to the prior art.
Figure 6b are side, two dimensional, cross-sectional views at the time of swing according to the prior art.
Figure 7a is a side, two dimensional, cross-sectional view of the body belonging to the prior art.
Figure 7b is a side, cross-sectional view of the central repair kit, in assembled state, belonging to the prior art.
Figure 7c is a lower, perspective view of central repair kit, in assembled state, belonging to the prior art.
Figure 7d is a top, perspective view of sphere bearing belonging to the prior art.

### Description of Component References

1. Centre repair kit
2. V stay bar
10. Body
11. Interior surface
   11.1. Spherical surface
12. Tab
13. Contact surface
   13.1 Upper end
20. Sphere bearing
21. Upper zone
22. Lower zone
   22.1 Exterior surface
23. Bearing material
   23.1 Lubricating cavities
24. Interior surface
30. Sphere
   31. Lower surface
40. Compression bearing
50. Compression member
60. Compression ring
70. Dust seal
80. Spiral ring
90. Clamp sleeve
100. Table
   101. Top surface
   102. Connection zone
   103. Contact surface
110. Connection piece
120. Seal
130. Cover

The drawings need not absolutely be put to scale the details not necessary to understand the invention may have been omitted. Furthermore, the elements that are at least substantially identical, or at least have substantially identical functions are indicated with the same number.

### Detailed Description of the Invention

In this detailed description, the preferred embodiments of the centre repair kit (1) and the body (10), which are the subjects of the invention, are described only for a better understanding of the subject-matter.

The centre repair kit embodiment, which is the subject of the invention is comprised of central repair kit (1) and its V stay bar (2) body (10). The components of said embodiment are these: body (10), sphere bearing (20), sphere (30), compression bearing (40), compression member (50), compression ring (60), dust seal (70), spiral ring (80), clamp sleeve (90), connection piece (110), seal (120) and cover (130).

V stay bar (2) is connected onto differential of vehicle by means of table (100). V stay bar (2) and repair kit embodiment, on the other hand, are fixed to table (100) by means of the connection piece (110) connected to connection zone (102) in cylindrical form. Connection piece (110) a bolt (110) and it is also good for performing pre tensioning process. Table (100) also provides reach of differential swing to V stay bar (2).

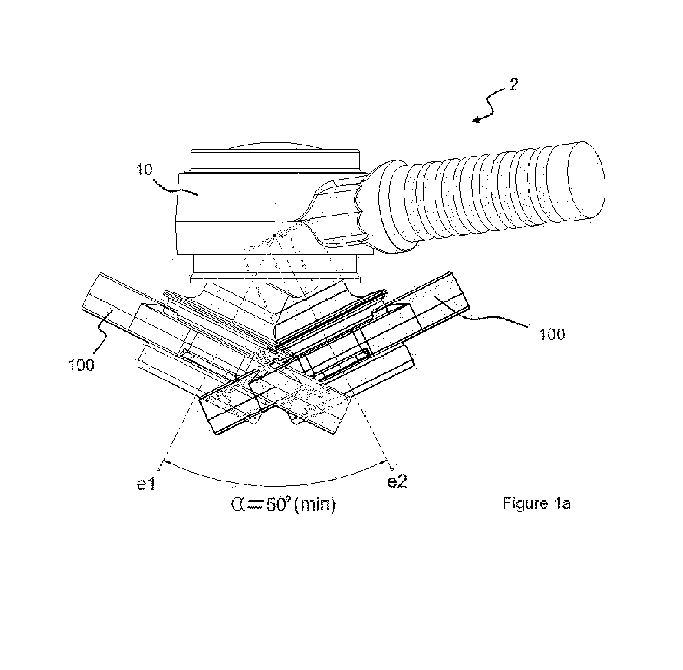

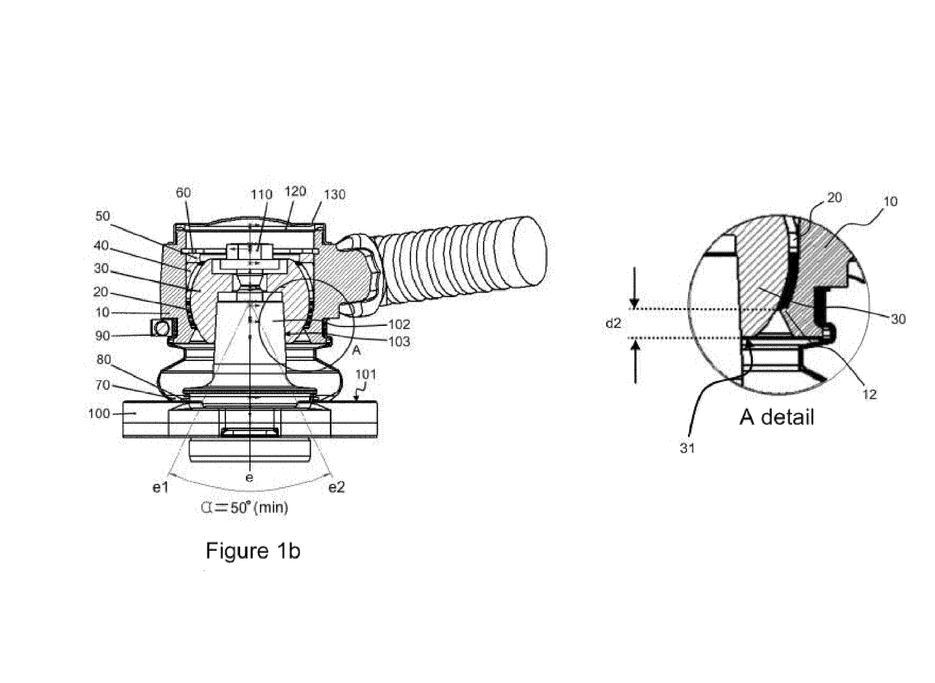

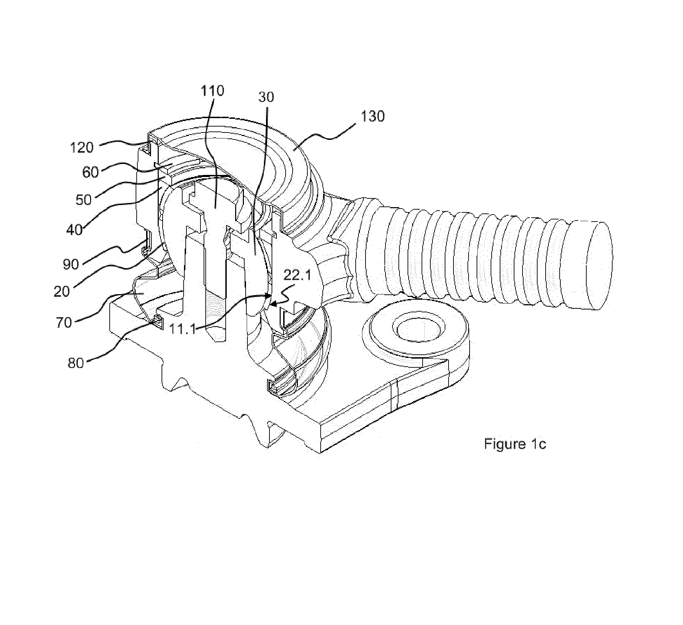

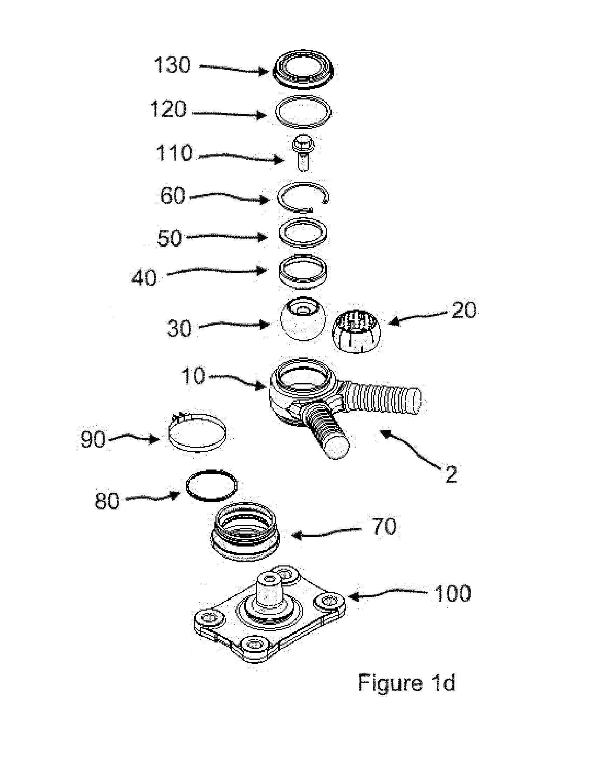

Of the preferred embodiment of central repair kit (1) and of body (10), being the subject of the invention, a side, two dimensional, cross-sectional view illustrating minimum moving angle (50°) is contained in Figure 1a, a cross-sectional view illustrating all its members in assembled form is contained in Figure 1b, a top, perspective view illustrating all its members in assembled form is contained in Figure 1c, a top, perspective view illustrating all its members in disassembled form, on the other hand, is contained in Figure 1d.

As will also be seen form Figure 1b and Figure 1c, sphere (30) is connected to table (100) by means of bolt (110). Sphere bearing (20) performs a function of bearing by being positioned between sphere (30) and body (10). Only the exterior surface (22.1) of lower zone (22) of sphere bearing (20) contacts interior surface (11) of the body (10). Between the upper zone (21) of sphere bearing (20) and the body (10), compression bearing (40) is positioned. Over the compression bearing (40), on the other hand, compression member (50) manufactured from sheet metal material is positioned. Function of compression bearing (40) and of compression member (50) is to provide compression of sphere bearing (20) and of sphere (30) within body (10). On compression member (50), compression ring (60) is positioned. Function of compression ring (60), on the other hand, compression and locking of sphere bearing (20) and of sphere (30) manufactured preferably from metallic material within body (10). Upper end of body (10) is covered with a cover (130)manufactured from sheet metal material. The cover (130) protects repair kit embodiment from environmental impacts. A seal (120) is positioned between edges of upper end of body (10) and cover (130). Seal (120) is a fibre ring (120). Fibre ring (120) provides tightness between cover (130) and body (10). The zone between lower end of body (10) upper end (101) of table (100) is covered with dust seal (70). Function of dust seal (70) is to prevent reach of dust into central repair kit (1) and of body (10). Dust seal (70) is fixed onto table (100) by spiral ring (80) manufactured from sheet metal material, being also fixed to body (10) by clamp sleeve (90) manufactured from sheet metal material.

In Figure 1a, moving angle (α) that can be made during swing is shown. Moving angle (α) can be defined as the angle between centre axes (e1, e2) during swing done two different directions of table (100) or of sphere (30). In the prior art, this angle is 44° maximum. However, by means of new forms of body (10) and sphere bearing (20) being subject of the invention , this angle is 50° minimum. Only the exterior surface (22.1) of lower zone (22) of sphere bearing (20) contacts interior surface (11) of the body (10). Interior surface (11) where said lower zone (22) contacts body (10) has a form with radius. Spherical surface (11.1) has been formed on interior surface (11) by radiused form. Similarly, exterior surface (22.1) of lower zone (22) of sphere bearing (20) also has spherical form. On immediate end of spherical surface (11.1), tab (12) has been formed. The tab (12) has been formed in a way preferably to make an angle of 90°with centre axis (e) in normal position (Figure 1b) of table (100). By means of tab (12), sagging and leakage of sphere bearing, which occurs due to excessive load that could be applied in assembly of sphere bearing (20) is prevented. Sphere bearing (20) that could sag due to load is unable to move and will not sag due to tab (12) with which it is already in contact. Therefore, the problem of restricting moving capability of sphere (30) which could occur via sagging is eliminated. Thus, reduction in moving angle (α) does not.

Position of table (12) can also be expressed as the zone positioned between the contact surface (13) where connection zone (102) of table (100) contacts body (10) and spherical surface (11.1) during swing of sphere (30) and of table (100). With formation of tab (12), upper end (13.1) of contact surface (13) has also been formed higher and more backwardly in comparison with upper ends of contact surfaces in the prior art. With positioning of upper end (13.1) higher and more backwardly, in normal position of table (Figure 1b), the vertical distance (d2) between lower end (31) of sphere (30) of sphere bearing (20) has been increased compared to the vertical distance (d1) in prior art between lower end (31) of sphere (30) of sphere bearing (20) (d2>d1). In this way, on the other hand, table (100) and sphere (30) will be able to make swing both ways greater than in the prior art. Moving angle (α) that can be obtained with said swing is greater than 44° or less than 50°.

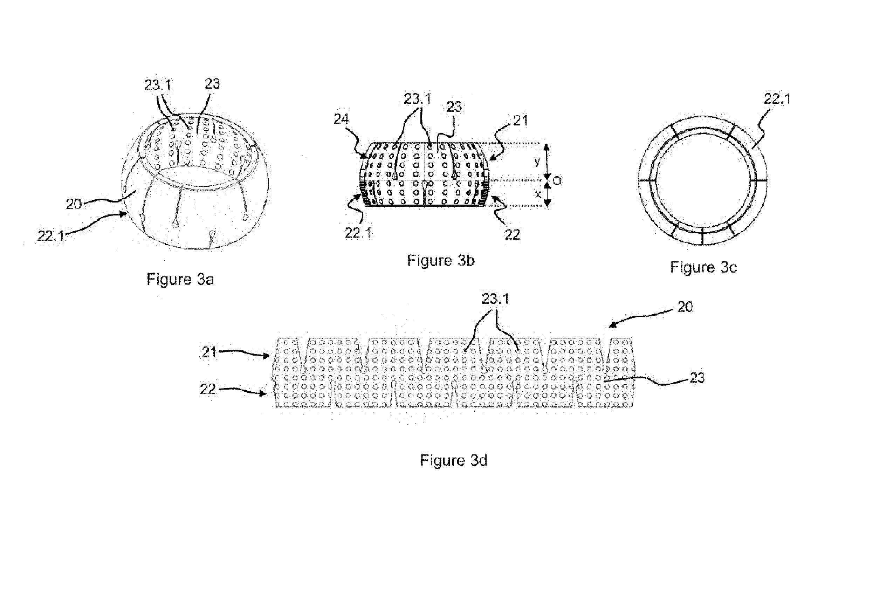

In Figure 3a, Figure 3b, Figure 3c and Figure 3d, two dimensional views of preferred embodiment of sphere bearing (20) in top perspective, side cross-sectional, two dimensional from lower and blasted state are given. Interior surface (24) of sphere bearing (20) has been coated with bearing material (23) manufactured from CSB22 type of polytetraflorethylene material. By means of said bearing material (23) manufactured from CSB22 type of polytetraflorethylene material, sphere bearing (20) has been provided with capability of formation. On bearing material (23), lubricating cavities in form of honeycomb are positioned. Lubricating cavities (23.1) provide lubrication of sphere (30) at high rate and its oil containment. Bearing material (23) of CSB22 elongates, at the same time, strength of central repair kit (1) and of body (10), thus of service life, and thanks to abrasion resistance's being high, on the other hand, increases abrasion time of said central repair kit (1) and of body (10). Form of sphere bearing (20) in closed, that is, during-the-assembly state resembles a sphere whose inside is empty and cut from top and lower. Its form in blasted state, on the other hand, is seen in Figure 3d. In Figure 3b sphere bearing (20) is seen from the part where its interior surface (24) is positioned. Since interior surface (24) of it is also covered with bearing material (23), and bearing material (23) and sphere bearing (20) have the same form, only the bearing material (23) can be seen in Figure 3d. In bearing material (23) and sphere bearing (20), distance (x) of centre horizontal axis (O) to lower end has been kept shorter than its distance (y) to upper end. Thus, sphere (30) positioned inside sphere bearing (20) is positioned at a lower level compared to the prior art. In this way, on the other hand, value of moving angle exceeds 44°.

## Claims

1. V stay bar (2) central repair kit (1) and body (10) embodiments used on vehicles working under heavy load such as lorries, semi-trailer trucks, buses, comprising
- a body (10) that provides connection of V stay bar (2) to central repair kit (1),
- a sphere (30) positioned inside said body (10),
- a sphere bearing (20) that performs bearing function between said sphere (30) and body (10), and it is **characterised in that**;
- interior surface (11) of said body (10) comprises spherical surface (11.1) formed on the zone where sphere bearing (20) contacts,
- lower zone (22) of said sphere bearing (20) comprises an exterior surface (22.1) having a spherical form.

2. An embodiment according to Claim 1, and it is **characterised in that**;
- the vertical distance (d2) between a sphere bearing (20) and a lower surface (31) of sphere (30) is greater than the vertical distance (d1) between sphere bearing (20) and sphere's (30) lower surface (31) in the prior art (d2>d1).

3. An embodiment according to Claim 1 and 2, and it is **characterised in that**;
- during swing of sphere (30), moving angle (α) is greater than 44° between centre axes (e1, e2).

4. An embodiment according to Claim 1 to 3, and it is **characterised in that**;
- during swing of sphere (30), moving angle (α) is at least 50° between centre axes (e1, e2).

5. An embodiment according to Claim 1 to 4, and it is **characterised in that**;
- it comprises a tab (12) formed at lower end of said spherical surface (11.1), preventing sagging and leakage of the sphere bearing (20).

6. An embodiment according to Claim 1 to 5, and it is **characterised in that**;
- it comprises a bearing material (23) manufactured from CSB22 type of polytetraflorethylene material with high resistance, coated onto interior surface (24) of said sphere bearing (20).

7. An embodiment according to Claim 6, and it is **characterised in that**;
- it comprises lubricating cavities (23.1), formed on said bearing material (23), that provide lubrication of the sphere (30) at high rate.
